# FASCICULE DE BREVET EUROPEEN

(11) **EP 3 052 797 B1**
(45) Date de publication et mention de la délivrance du brevet: **01.11.2017**
(21) Numéro de dépôt: 14795850.8
(22) Date de dépôt: 18.09.2014
(51) Int. Cl.: F02K 9/50, F02K 9/94

(54) **DISPOSITIF DE PRESSURISATION AUTOGÈNE D'UN RÉSERVOIR D'ERGOL**
DRUCKBEAUFSCHLAGUNGSVORRICHTUNG FÜR EIN TREIBSTOFF-RESERVOIR
PRESSURISATION DEVICE FOR A PROPELLANT RESERVOIR

(30) Priorité: 30.09.2013 FR 1359392
(43) Date de publication de la demande: 10.08.2016
(73) Titulaire: ArianeGroup SAS, 75015 Paris (FR)
(72) Inventeur: ROZ, Gérard, F-27510 Pressagny l'Orgueilleux (FR); HAYOUN, David, H3W 2Y2 Montréal (CA); RAVIER, Nicolas, F-27200 Vernon (FR)
(74) Mandataire: Intès, Didier Gérard André
(86) Numéro de dépôt international: PCT/FR2014/052323
(87) Numéro de publication internationale: WO 2015/044563

(56) Documents cités:
- WO-A1-2012/172238
- WO-A1-2013/088030
- US-A1- 2002 184 875
- US-A1- 2003 136 111

## Description

L'invention concerne un ensemble propulsif pour fusée selon la revendication 1, comprenant un réservoir configuré pour contenir un ergol, un moteur comportant une chambre de combustion, une conduite d'alimentation en ergol qui s'étend entre le réservoir et la chambre de combustion et sur laquelle est disposée une vanne d'isolement, et un réchauffeur dont une entrée est raccordée à la conduite d'alimentation et une sortie est raccordée au réservoir.

Le moteur est habituellement un moteur dans lequel les gaz en sortie de la chambre de combustion sont évacués via une tuyère de manière à développer une poussée. La combustion se fait par un mélange d'ergols, respectivement un carburant tel que de l'hydrogène ou du méthane, et un comburant tel que de l'oxygène. Dans les documents WO 2012/172238 A1 et WO 2013/088030 A1 des moteurs de fusée sont décrits. En général, dans de tels ensembles propulsifs, il est nécessaire de maintenir sous pression les réservoirs d'ergols, afin d'assurer que le débit d'ergols dirigé vers le moteur soit régulier. Dans le cas où un ergol est de l'oxygène liquide, le maintien en pression du réservoir d'oxygène est assuré en injectant dans le ciel gazeux du réservoir, soit un gaz neutre tel que de l'hélium, soit de l'oxygène en phase vapeur, obtenu par vaporisation dans un réchauffeur d'oxygène liquide provenant du réservoir. Dans ce cas, l'oxygène liquide destiné à être vaporisé est prélevé directement sur la conduite d'alimentation en oxygène de la chambre de combustion.

Toutefois, l'oxygène devant être en phase liquide en amont du réchauffeur et en phase gazeuse lorsqu'il rejoint le réservoir, il existe un risque de présence d'oxygène diphasique dans le réchauffeur. Ceci dégrade nettement le rendement du réchauffeur et des bulles risqueraient de remonter le circuit d'oxygène liquide, ce qui doit être évité. Afin de s'assurer que l'oxygène reste monophasique dans le réchauffeur, il est prévu un système d'isolation (usuellement appelé « système anti-flood ») en amont du réchauffeur. Ce système doit empêcher l'oxygène prélevé sur la conduite d'alimentation de pénétrer dans le réchauffeur tant que sa pression est inférieure à la pression critique de l'oxygène. Généralement, le système anti-flood consiste en une vanne à seuil, appelée vanne anti-flood de pressurisation du réservoir d'oxygène et uniquement dédiée à cette fonction.

Avec une telle vanne, la pression de l'oxygène augmente à l'entrée du réchauffeur jusqu'à atteindre la pression de passage de la vanne, choisie supérieure à la pression critique de l'oxygène. A cette pression de passage, l'oxygène est donc en phase supercritique. Compte-tenu de sa pression, il peut passer la vanne et entrer dans le réchauffeur, où sa température augmente et dans lequel il reste en phase supercritique. Après la sortie du réchauffeur, l'oxygène supercritique peut se détendre et entrer en phase gazeuse dans le réservoir pour le maintenir sous pression.

Cependant, l'emploi d'une vanne anti-flood représente un surcoût et une masse additionnelle pour l'ensemble propulsif. Il est bien connu que la masse, en particulier, est un critère crucial pour la conception des fusées. De plus, la vanne anti-flood est généralement une électrovanne qui nécessite un asservissement sur la pression de l'oxygène à l'entrée du réchauffeur, ce qui complique encore l'ensemble propulsif. Enfin, l'ouverture et la fermeture de la vanne anti-flood doivent être intégrées de manière fiable et robuste au séquençage de l'ensemble des mouvements de vannes.

L'objectif de l'invention est donc de proposer un ensemble propulsif du type présenté en introduction, présentant un système anti-flood, et qui soit plus performant, par exemple en termes de masse et/ou de coûts, que les ensembles propulsifs de types connus.

Cet objectif est atteint par un ensemble propulsif du type présenté en introduction, grâce au fait que l'entrée du réchauffeur comprend une conduite d'entrée raccordée d'une part à la conduite d'alimentation en aval de la vanne d'isolement et d'autre part à une amenée de fluide neutre.

Ainsi dans l'ensemble propulsif, la fonction d'isolation du système anti-flood est remplie par la combinaison de la vanne d'isolement et d'une amenée de fluide neutre. La vanne d'isolement a pour autre fonction de permettre ou non l'alimentation en ergol de la chambre de combustion. Le fluide neutre peut être un fluide de commande, servant aux commandes hydrauliques ou pneumatiques de certains autres systèmes de l'ensemble propulsif, un fluide de balayage, servant à parcourir des cavités ou des conduites pour les vider d'un autre fluide ou empêcher qu'un autre fluide n'y pénètre, un fluide d'étanchéité utilisé dans des systèmes d'étanchéité dynamiques, etc. La vanne dédiée utilisée dans l'art antérieur est donc remplacée par la combinaison de systèmes qui ont d'autres fonctions dans l'ensemble propulsif, ce qui a pour conséquence un gain en coûts et en masse notamment.

Par « fluide neutre », on désigne ici un fluide dont la composition est sans conséquence préjudiciable dans un certain contexte. En particulier, le fluide neutre ici employé doit être inerte avec l'ergol et avec les conduites qu'il parcourt. En d'autres termes, le fluide neutre peut coexister avec l'ergol sans produire de réaction physique ou chimique et, en particulier, sans provoquer de combustion. En particulier, le fluide neutre peut être de l'hélium.

Grâce à ce système, le fluide neutre balaye la conduite d'entrée du réchauffeur et ne laisse pénétrer l'ergol dans le réchauffeur que si la pression de l'ergol est supérieure à la pression du fluide neutre. De plus, on évite le besoin d'un asservissement dans la mesure où l'asservissement de l'ouverture de la vanne anti-flood sur la pression de l'oxygène entrant dans la conduite d'entrée du réchauffeur est remplacé par un contrôle dynamique par la pression du fluide neutre.

Dans certains modes de réalisation, l'ensemble propulsif comporte des moyens configurés pour maintenir, dans l'amenée de fluide neutre, une pression du fluide neutre au moins égale à la pression critique de l'ergol. De cette manière, le fluide neutre balaye la conduite d'entrée et ne laisse pénétrer l'ergol dans le réchauffeur que si la pression de l'ergol est supérieure à la pression du fluide neutre, donc supérieure à la pression critique de l'ergol. Ceci permet d'assurer que l'ergol soit monophasique dans le réchauffeur, donc d'augmenter le rendement du réchauffeur.

Dans certains modes de réalisation, l'amenée de fluide neutre comporte un clapet anti-retour qui autorise la circulation de fluide dans l'amenée seulement dans le sens allant vers le réchauffeur. Ainsi, lorsque la pression de l'ergol est supérieure à la pression du fluide neutre, l'ergol ne peut pas remonter l'amenée de fluide neutre. Ceci empêche que l'ergol n'atteigne le réservoir de fluide neutre ou n'interfère avec d'autres fonctions du fluide neutre.

Dans certains modes de réalisation, l'ensemble propulsif comporte des moyens pour réaliser un balayage d'une tête d'injection de la chambre de combustion avec le fluide neutre. De cette manière, en aval de la vanne d'isolement, le balayage de la tête d'injection de la chambre de combustion et l'alimentation en ergol de cette tête d'injection se font par une même conduite. Ceci permet encore un gain en termes de masse et de coûts.

Dans certains modes de réalisation, le fluide neutre est de l'hélium. L'hélium, qui est souvent utilisé comme fluide de balayage ou fluide de commande, est généralement présent en grande quantité et sous une pression suffisante dans les ensembles propulsifs. Dans certains autres modes de réalisation, le fluide neutre est de l'azote.

Dans certains modes de réalisation, l'ergol est de l'oxygène.

L'ensemble propulsif selon l'invention peut comprendre différents types de moteurs.

L'ensemble propulsif peut ainsi être réalisé sur la base d'un moteur de type 'Tap-off', c'est-à-dire un moteur dans lequel des gaz d'échappement sont prélevés pour fournir de l'énergie (sous forme thermique et/ou mécanique) à certaines parties du moteur.

Dans certains modes de réalisation, le réchauffeur est un échangeur thermique qui coopère avec une conduite transportant des gaz de combustion. Le réchauffeur peut être disposé à différents emplacements.

Il peut tout d'abord être agencé au moins en partie dans une paroi de la chambre de combustion et/ou d'une tuyère d'éjection du moteur. Cependant, il peut également être agencé à distance de la chambre de combustion et d'une tuyère d'éjection du moteur. Dans ce cas, l'ensemble propulsif comprend un circuit de gaz d'échappement servant à prélever des gaz d'échappement du moteur et à les transporter jusqu'au réchauffeur. Avantageusement, le circuit de gaz d'échappement peut permettre en outre d'injecter les gaz d'échappement prélevés dans au moins une turbine, pour actionner celle(s)-ci. La ou les turbine(s) peu(ven)t être celle(s) des turbopompes d'alimentation du moteur en ergol, par exemple les turbopompes d'alimentation en oxygène et en hydrogène.

Lorsque les gaz d'échappement prélevés sont utilisés pour actionner une turbine, on peut prévoir que l'échangeur thermique soit situé en aval de ladite au moins une turbine dans le circuit de prélèvement de gaz d'échappement.

Lorsque les gaz d'échappement prélevés sont utilisés pour actionner une ou plusieurs turbine(s), l'ensemble propulsif peut comprendre en outre une conduite de bipasse, reliant deux points du circuit de gaz d'échappement disposés respectivement en amont et en aval de ladite au moins une turbine. La conduite de bipasse doit alors pouvoir être ouverte ou fermée, à l'aide de valve(s), selon le mode de fonctionnement du moteur : elle doit pouvoir être fermée pour permettre que les turbines soient entraînées par les gaz d'échappement prélevés ; elle doit pouvoir être ouverte dans le but inverse.

Au lieu d'être prélevés directement dans la chambre de combustion, les gaz de combustion peuvent provenir d'un générateur de gaz. Le générateur de gaz est alimenté en ergols par des conduites d'entrée qui prélèvent une partie des ergols sur les conduites d'alimentation de la chambre de combustion. La combustion a lieu dans le générateur de gaz. Généralement, les gaz de combustion sont ensuite recueillis pour circuler dans le réchauffeur puis actionner une ou plusieurs turbines.

L'ensemble propulsif peut également être réalisé sur la base d'un moteur de type 'Expander', c'est-à-dire un moteur dans lequel un fluide caloporteur, notamment un ergol (dans le cas présent de l'hydrogène) est prélevé et vaporisé, afin de fournir de l'énergie (sous forme thermique et/ou mécanique) à certaines parties du moteur.

Ainsi, dans certains modes de réalisation, le réchauffeur est un échangeur thermique qui coopère avec une conduite transportant un autre ergol.

L'ensemble propulsif peut comprendre un circuit de circulation d'un fluide caloporteur, comprenant un échangeur thermique primaire permettant qu'une énergie thermique soit cédée par des gaz d'échappement à un fluide caloporteur, ainsi que le réchauffeur, celui-ci constituant un échangeur thermique secondaire permettant qu'une énergie thermique soit cédée par le fluide caloporteur à l'oxygène. L'utilisation d'un fluide caloporteur intermédiaire apporte une souplesse dans l'agencement du réchauffeur et du circuit d'oxygène vaporisé.

Le fluide caloporteur peut permettre le transfert d'énergie non seulement sous forme thermique, mais également sous forme mécanique. Dans ce but, dans l'ensemble propulsif, l'échangeur thermique primaire est apte à vaporiser le fluide caloporteur ; et le circuit de circulation de fluide caloporteur peut permettre d'injecter le fluide caloporteur vaporisé dans au moins une turbine pour actionner celle(s)-ci. La vaporisation du fluide caloporteur permet avantageusement de disposer d'un fluide sous pression ; l'énergie apportée au fluide caloporteur peut alors être récupérée via une ou plusieurs turbines. Cette ou ces turbine(s) peuvent être notamment celles des turbopompes des circuits d'alimentation en ergols du moteur.

De préférence, le fluide caloporteur est un autre ergol consommé par le moteur, par exemple de l'hydrogène.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un ensemble propulsif de l'art antérieur, sur la base d'un moteur de type 'Tap-off' ;
- la figure 2 est une vue schématique d'un ensemble propulsif selon l'invention, sur la base d'un moteur de type 'Tap-off' ;
- la figure 3 est une vue schématique d'un ensemble propulsif selon l'invention, sur la base d'un moteur de type 'Expander'.

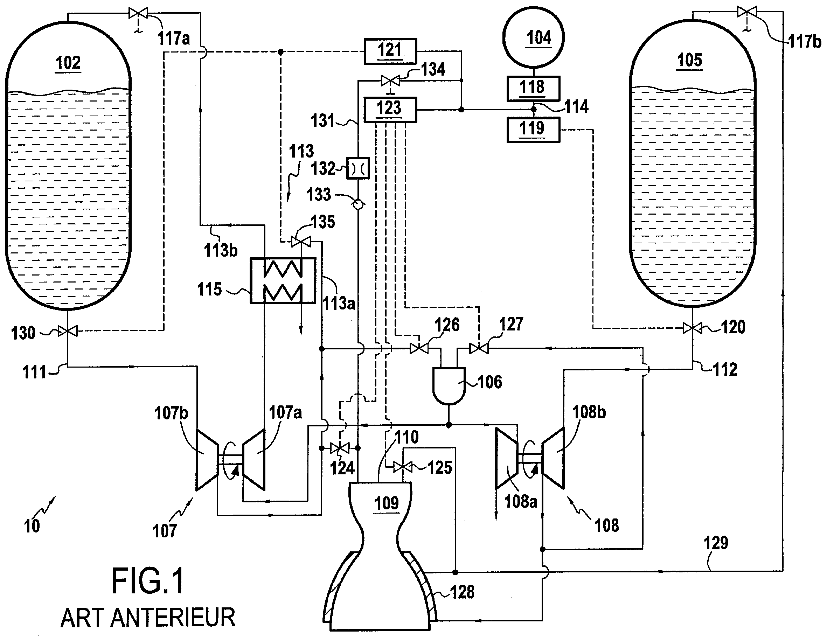

La figure 1 illustre de manière schématique un ensemble propulsif 101 de l'art antérieur, et plus spécifiquement un ensemble propulsif comprenant un moteur de type Vulcain propulsant un étage cryogénique principal (ECP) de lanceur type Ariane 5.

Cet ensemble propulsif 101 comporte un premier réservoir 102, contenant l'oxygène - ou plus généralement un ergol oxydant - sous forme liquide en tant que premier ergol, un deuxième réservoir 104, contenant de l'hélium gazeux à haute pression, notamment pour les circuits de commande pneumatique de l'ensemble propulsif, et un troisième réservoir 105, contenant l'hydrogène - ou plus généralement un ergol réducteur - sous forme liquide en tant que deuxième ergol. L'ensemble propulsif 101 comporte aussi une conduite 111 d'alimentation de la chambre de combustion 109 en oxygène, et une conduite 112 d'alimentation de la chambre de combustion 109 en hydrogène, ainsi qu'un générateur de gaz 106.

La conduite d'alimentation en ergol oxydant 111 passe par une première turbopompe 107 qui comprend une turbine 107a et une pompe 107b. Cette turbopompe 107 est connectée au générateur de gaz 106 pour recevoir des gaz chauds pour l'actionnement de la turbine 107a, laquelle entraîne la pompe 107b pour l'alimentation de la chambre de combustion 109 en ergol oxydant. La conduite d'alimentation en ergol réducteur 112 passe par une deuxième turbopompe 108 qui comprend une turbine 108a et une pompe 108b. Cette turbopompe 108 est connectée au générateur de gaz 106 pour recevoir aussi des gaz chauds du générateur de gaz 106 pour l'actionnement de la turbine 108a, laquelle entraîne la pompe 108b pour l'alimentation de la chambre de combustion 109 en ergol réducteur. Le générateur de gaz 106 est relié aussi aux sorties des pompes 107b, 108b pour son alimentation en hydrogène et oxygène.

L'ensemble propulsif 101 comporte aussi un premier circuit de pressurisation 113 pour la pressurisation du premier réservoir 102. Le premier circuit de pressurisation 113 et la conduite d'alimentation en ergol oxydant 111 sont connectés en aval de la première turbopompe 107 et en amont d'une Vanne Chambre Oxygène (VCO) 124 pilotant l'arrivée d'oxygène dans la chambre de combustion 109. La VCO 124 forme une vanne d'isolement. Le premier circuit de pressurisation 113 comprend un premier échangeur thermique 115 pour réchauffer et vaporiser l'oxygène prélevé sur la conduite d'alimentation 111 avec les calories provenant de gaz chauds en aval de la turbine 107a de la première turbopompe 107. Ce premier échangeur de chaleur forme un réchauffeur. L'oxygène ainsi vaporisé est destiné à pressuriser le premier réservoir 102. Le premier circuit de pressurisation 113 comprend une conduite d'entrée 113a et une conduite de sortie 113b, placées respectivement en amont et en aval du premier échangeur thermique 115. La conduite d'entrée 113a comprend en outre une vanne à seuil 135 à l'entrée du premier échangeur thermique 115. Cette vanne à seuil 135, utilisée comme système anti-flood, ne laisse passer l'oxygène vers le premier échangeur thermique 115 que si la pression de l'oxygène est supérieure à la pression de passage de la vanne 135. Afin d'éviter que l'oxygène soit diphasique dans le premier échangeur thermique 115, la pression de passage de la vanne 135 est choisie supérieure à la pression critique de l'oxygène (environ 50,4 bar). Le premier circuit de pressurisation 113 comprend aussi une vanne 117a pour empêcher le premier réservoir 102 de se dépressuriser lorsque la pression dans la conduite de sortie 113b est inférieure à la pression dans le premier réservoir 102, et pour empêcher une pressurisation excessive du réservoir 102, notamment lorsqu'aucun fluide ne sort du réservoir par la conduite d'alimentation en oxygène 111.

Le circuit de contrôle 114 comporte un ensemble de vannes formant une Platine de Gonflage et Détente (PGD) 118 pour piloter le passage d'hélium gazeux dans les deux sens. Ce circuit de contrôle 114 comprend un Boîtier Electrovannes Hydrogène (BEVH) 119 servant à la commande d'une Vanne d'Alimentation Hydrogène (VAH) 120 pour le pilotage de la conduite d'alimentation en hydrogène 112. En outre, entre la PGD 118 et le BEVH 119, le circuit de contrôle 114 présente des dérivations pour alimenter différents boitiers d'électrovannes. Le Boîtier Electrovannes Oxygène (BEVO) 121 sert à la commande d'une Vanne d'Alimentation Oxygène (VAO) 130 pour le pilotage de la conduite d'alimentation en oxygène 111, et à la commande de la vanne à seuil 135. Enfin, le Boîtier Electrovannes Chambre (BEVC) 123 sert à la commande de la Vanne Chambre Oxygène (VCO), d'une Vanne Chambre Hydrogène (VCH) 125 pilotant l'arrivée d'hydrogène dans la chambre de combustion 109, d'une Vanne Générateur Oxygène (VGO) 126 pilotant l'arrivée d'oxygène dans le générateur de gaz 106 et d'une Vanne Générateur Hydrogène (VGH) 127 pilotant l'arrivée d'hydrogène dans le générateur de gaz 106. Toutefois, il n'est pas nécessaire que les vannes VCO 124, VCH 125, VGO 126 et VGH 127 soient commandés à l'hélium. Ces vannes peuvent également être des électrovannes. La pression d'hélium dans le circuit de contrôle 114 est imposée par les pressions nécessaires aux commandes de vannes et est généralement de l'ordre de 70 bar.

Le deuxième réservoir 104 est connecté à la conduite d'alimentation en oxygène 111, en aval de la VCO 124, par une amenée 131. Sur cette amenée 131 se trouve une restriction 132 pour régler le débit d'hélium parcourant l'amenée 131. Les conditions d'alimentation de l'amenée 131 sont choisies de manière à ce que le régime d'écoulement soit sonique, si bien que la pression en aval de la restriction 132 est indépendante de la pression en amont de la restriction 132 tant que le rapport de la pression amont sur la pression aval reste supérieur à environ 2. Ainsi, la restriction 132 permet d'amener l'hélium en aval de la restriction 132 à un certain débit et à une valeur de pression appelée pression de calibrage d'hélium. Sur l'amenée 131 se trouvent également un clapet anti-retour 133 pour ne permettre la circulation de fluide dans l'amenée 131 que dans le sens sortant du deuxième réservoir 104, et une vanne de balayage 134 pour permettre ou bloquer la circulation d'hélium dans l'amenée 131. La vanne de balayage 134 est par exemple une électrovanne.

L'ensemble propulsif 101 comporte aussi, dans la conduite d'alimentation en hydrogène 112, entre la deuxième turbopompe 108 et la plaque d'injection 110 de la chambre de combustion 109, un deuxième échangeur thermique 128, dit régénératif, servant à refroidir les parois de la chambre de combustion 109. En outre, dans cet ensemble propulsif 101, un deuxième circuit de pressurisation 129 relie cette conduite d'alimentation en hydrogène 112, en aval du deuxième échangeur thermique 128, au troisième réservoir 105, afin de le pressuriser avec de l'hydrogène vaporisé dans le deuxième échangeur thermique 128 avant d'être dérivé de la conduite d'alimentation en hydrogène 112. Le deuxième circuit de pressurisation 129 comporte une vanne 117b, similaire à la vanne 117a, pour empêcher le troisième réservoir 105 de se dépressuriser lorsque la pression dans le deuxième circuit de pressurisation 129 est inférieure à la pression dans le troisième réservoir 105, et pour empêcher une pressurisation excessive du réservoir 105, notamment lorsqu'aucun fluide ne sort du réservoir par la conduite d'alimentation en hydrogène 112.

Avant le démarrage de l'ensemble propulsif 101, il est nécessaire de procéder à une mise en froid de la chambre de combustion 109. Cette mise en froid, d'une durée généralement inférieure à trois secondes, peut être effectuée en faisant circuler de l'hydrogène liquide dans la chambre de combustion via la conduite d'alimentation en hydrogène 112. Pendant cette étape, la VCH 125 est donc ouverte. En revanche, la VCO 124 est fermée, si bien qu'il n'y a pas de circulation d'oxygène dans le premier circuit de pressurisation 113. La vanne de balayage 134 est ouverte. L'hélium circulant dans l'amenée 131, dont le débit est régulé par la restriction 132, rejoint la conduite d'alimentation 111 en aval de la VCO 124 et est envoyé vers la chambre de combustion 109. Ainsi, cet hélium empêche l'hydrogène utilisé pour refroidir la chambre de combustion 109 de remonter par la conduite d'alimentation en oxygène 111. Ceci évite un mélange d'hydrogène et d'oxygène en amont de la chambre de combustion, qui pourrait déclencher une combustion et endommager certaines parties de l'ensemble propulsif 101. Au cours de la mise en froid, les vannes 117a et 135 sont fermées pour empêcher le premier réservoir 102 de se dépressuriser lorsque la pression dans la conduite de sortie 113b est inférieure à la pression dans le premier réservoir 102, et empêcher une pressurisation excessive du réservoir 102 dans le cas contraire.

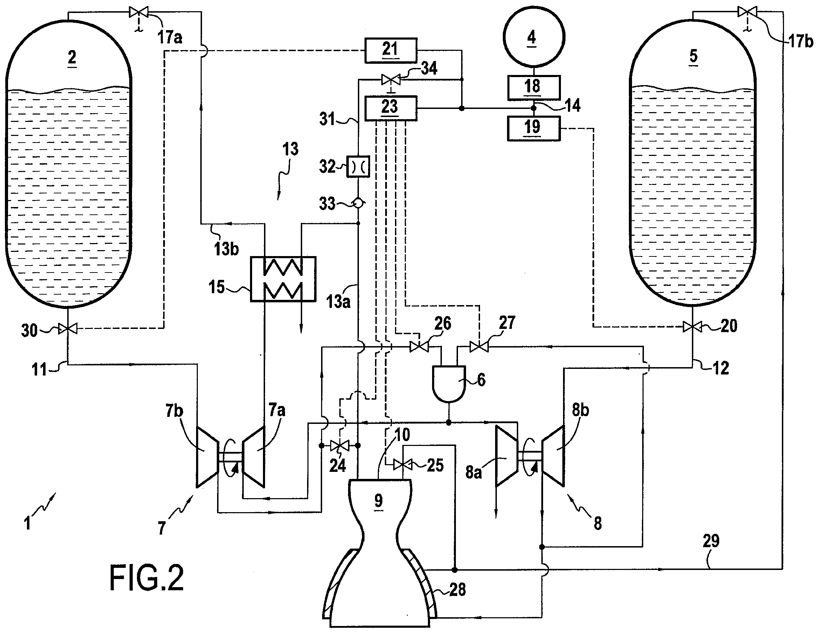

La figure 2 illustre un ensemble propulsif 1, suivant un mode de réalisation de la présente invention, qui offre une masse réduite et une moindre complexité par rapport à cet art antérieur. Sauf mention contraire, l'ensemble propulsif 1 est identique à l'ensemble propulsif 101. Par suite, seules seront décrites les caractéristiques de l'ensemble propulsif 1 qui le distinguent de l'ensemble propulsif 101. Par ailleurs, les éléments soit identiques soit similaires portent les mêmes références, au chiffre des centaines près, dans ces deux ensembles propulsifs.

L'ensemble propulsif 1, réalisé sur la base d'un moteur de type 'Tap-off', comporte un premier circuit de pressurisation 13, reliant la conduite d'alimentation en ergol oxydant 11 au premier réservoir 2 pour la pressurisation du premier réservoir 2. Le premier circuit de pressurisation 13 et la conduite d'alimentation en ergol oxydant 11 sont connectés en aval de la Vanne Chambre Oxygène 24. Le premier circuit de pressurisation 13 comprend un premier échangeur thermique 15 pour réchauffer et vaporiser l'oxygène prélevé sur la conduite d'alimentation 11 avec les calories provenant de gaz chauds en aval de la turbine 7a de la première turbopompe 7. Ce premier échangeur thermique 15 forme un réchauffeur. L'oxygène ainsi vaporisé est destiné à pressuriser le premier réservoir 2. Le premier circuit de pressurisation 13 comprend une conduite d'entrée 13a et une conduite de sortie 13b, placées respectivement en amont et en aval du premier échangeur thermique 15. Contrairement à l'ensemble propulsif de l'art antérieur, la conduite d'entrée 13a ne comprend pas de vanne à seuil à l'entrée du premier échangeur thermique 15 en guise de système anti-flood. Le système anti-flood utilisé est décrit ci-après.

Le deuxième réservoir 4 est connecté d'une part à la conduite d'alimentation en oxygène 11 en aval de la VCO 24, pour assurer un balayage d'hélium lors de la mise en froid de la chambre de combustion 9, mais aussi, d'autre part, à la conduite d'entrée 13a, en amont du premier échangeur thermique 15, par une amenée 31. Sur l'amenée 31 se trouvent une restriction 32, un clapet anti-retour 33 et une vanne de balayage 34.

Dans ce mode de réalisation, le système anti-flood comprend la vanne d'isolement (VCO) 24 et l'amenée 31. La restriction 32 est réglée pour fournir un certain débit d'hélium, et la pression d'alimentation d'hélium en amont de la restriction 32 est choisie pour que la pression de calibrage d'hélium soit supérieure à la pression critique de l'oxygène. Le fonctionnement du système anti-flood lors d'un transitoire de démarrage de l'ensemble propulsif est décrit ci-après.

La mise en froid de la chambre de combustion se déroule sensiblement comme le dispositif dans l'art antérieur précédemment décrit. La VCH 25 est ouverte pour la mise en froid, la vanne de balayage 34 est ouverte pour le balayage d'hélium, et la VCO 24 est fermée. A la différence du dispositif de l'art antérieur, de l'hélium peut circuler dans le premier échangeur thermique 15 tant que la pression d'hélium dans l'amenée 31 est supérieure à la pression d'oxygène en aval de la VCO 24. La vanne 17a est toutefois fermée.

Après la mise en froid de la chambre de combustion 9, le transitoire de démarrage de l'ensemble propulsif peut débuter. La VCO 24, la VGO 26 et la VGH 27 sont ouvertes. Les turbopompes 7, 8 sont progressivement mises en action par les gaz de combustion issus de la combustion de l'oxygène et de l'hydrogène dans le générateur de gaz 6 et l'oxygène peut pénétrer dans la chambre de combustion 9. La vanne de balayage 34 est toujours ouverte.

Tant que la pression de l'oxygène dans la conduite d'alimentation 11, en aval de la VCO 24, est inférieure à la pression de calibrage d'hélium, l'oxygène ne peut pénétrer dans la conduite d'entrée 13a. La pression de calibrage d'hélium étant choisie supérieure à la pression critique de l'oxygène, on évite ainsi la présence d'oxygène à une pression inférieure à la pression critique de l'oxygène dans le premier circuit de pressurisation 13.

En raison de l'action de la turbopompe 7, la pression de l'oxygène dans la conduite d'alimentation 11 augmente. Lorsqu'elle dépasse la pression de calibrage d'hélium, l'oxygène peut pénétrer dans la conduite d'entrée 13a. La vanne 17a est alors ouverte. L'ouverture de la vanne 17a peut être commandée par un asservissement sur la pression d'oxygène en aval de la VCO 24, ou, avantageusement, son instant d'ouverture peut être déterminé au préalable lors des essais de mise au point du moteur. Par ailleurs, grâce au clapet anti-retour 33, l'oxygène ne peut pas entrer dans l'amenée 31. Ceci empêche la présence d'oxygène dans le deuxième réservoir 4. L'oxygène entrant dans la conduite d'entrée 13a se trouve à l'état supercritique, puisque sa pression est supérieure à la pression de calibrage d'hélium, qui est à son tour supérieure à la pression critique de l'oxygène. L'oxygène entre ensuite dans le premier échangeur thermique 15, dans lequel il reste monophasique. A la sortie du premier échangeur thermique, dans la conduite de sortie 13b, l'oxygène peut donc passer la vanne 17a, passer à l'état gazeux et rejoindre le premier réservoir 2 pour le pressuriser.

L'action de la première turbopompe 7 continue à augmenter la pression de l'oxygène dans la conduite d'alimentation en oxygène 11, jusqu'à atteindre une pression nominale de régime permanent. Cette pression nominale, généralement de l'ordre de 140 bar, est bien supérieure à la pression critique de l'oxygène. C'est pourquoi, par souci d'économie d'hélium, quelques instants après que la pression d'oxygène a dépassé la pression de calibrage d'hélium, la vanne de balayage 34 est fermée. La pression de l'oxygène dans la conduite d'alimentation 11 restant supérieure à la pression critique de l'oxygène, le contrôle dynamique de pression (en d'autres termes le système anti-flood) peut en effet être désactivé.

Dans le mode de réalisation décrit, le réchauffeur dans lequel passe l'oxygène destiné à pressuriser le premier réservoir 2 est l'échangeur thermique 15, qui coopère avec une conduite transportant des gaz de combustion issus du générateur de gaz 6. Toutefois, l'échangeur thermique 15 peut aussi coopérer avec une conduite transportant des gaz de combustion prélevés dans la chambre de combustion 9 (moteur de type Tap-off).

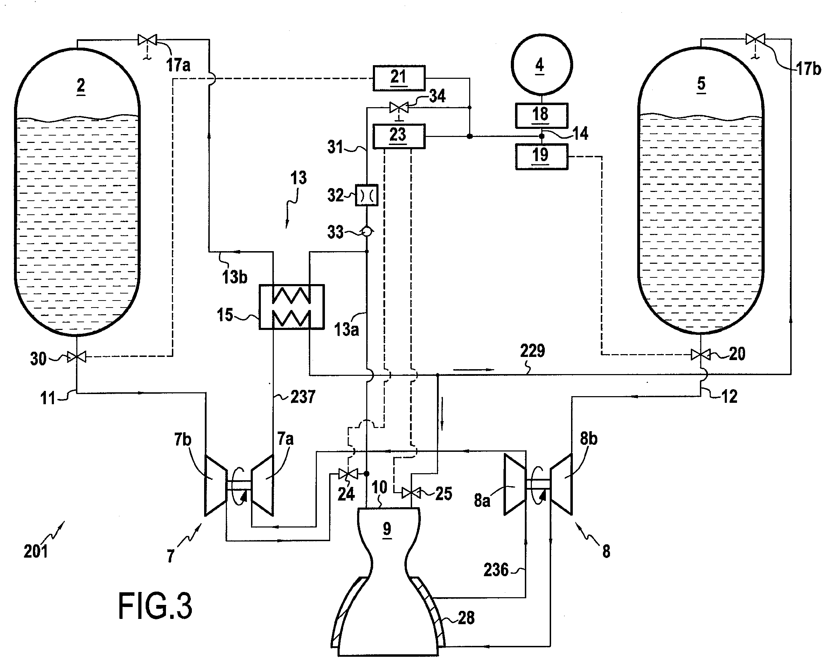

La figure 3 présente un système propulsif 201 selon un autre mode de réalisation de l'invention, réalisé sur la base d'un moteur de type 'Expander'. Le fonctionnement du système anti-flood est sensiblement le même que dans le mode de réalisation de la figure 2 et n'est pas décrit à nouveau. L'ensemble propulsif 201 ne comprend pas de générateur de gaz, ni les conduites et vannes qui y sont associées. Pour entraîner les turbopompes 7, 8, une conduite de prélèvement 236 prélève de l'hydrogène vaporisé en aval de l'échangeur thermique 28, et le fait circuler à travers les turbines 7a, 8a, ce qui entraîne les pompes 7b, 8b. Par exemple, la conduite 236 fait circuler l'hydrogène vaporisé dans la turbine hydrogène 8a puis dans la turbine oxygène 7a ; les turbines peuvent être parcourues dans l'ordre inverse, l'ordre optimal étant déterminé par l'homme du métier selon ses connaissances. Une conduite d'échange 237 connecte alors la sortie de la turbine oxygène 7a au premier échangeur thermique 15. Ainsi, dans le premier échangeur thermique 15, il se produit un échange thermique entre l'hydrogène vaporisé entrant par la conduite d'échange 237 et l'oxygène supercritique entrant par la conduite d'entrée 13a. A la sortie du premier échangeur thermique 15, l'hydrogène peut être envoyé vers la chambre de combustion 9 pour servir de carburant, ou vers le troisième réservoir 5, via une deuxième conduite de pressurisation 229, pour le pressuriser.

Le réchauffeur peut également ne pas être un échangeur thermique entre deux fluides, mais par exemple un réchauffeur électrique.

Quoique la présente invention ait été décrite en se référant à des modes de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Ensemble propulsif (1, 201) pour une fusée, comprenant un réservoir (2) configuré pour contenir un ergol, un moteur comportant une chambre de combustion (9), une conduite d'alimentation en ergol (11) qui s'étend entre le réservoir (2) et la chambre de combustion (9) et sur laquelle est disposée une vanne d'isolement (24), et un réchauffeur (15) dont une entrée est raccordée à la conduite d'alimentation (11) et une sortie est raccordée au réservoir (2), **caractérisé en ce que** l'entrée du réchauffeur (15) comprend une conduite d'entrée (13a) raccordée d'une part à la conduite d'alimentation (11) en aval de la vanne d'isolement (24) et d'autre part à une amenée de fluide neutre (31).

2. Ensemble propulsif (1, 201) selon la revendication 1, **caractérisé en ce qu'**il comporte des moyens (4, 32) configurés pour maintenir, dans l'amenée de fluide neutre (31), une pression du fluide neutre au moins égale à la pression critique de l'ergol.

3. Ensemble propulsif (1, 201) selon l'une quelconque des revendications précédentes, **caractérisé en ce que** l'amenée de fluide neutre (31) comporte un clapet anti-retour (33) qui autorise la circulation de fluide dans l'amenée (31) seulement dans le sens allant vers le réchauffeur (15).

4. Ensemble propulsif (1, 201) selon l'une quelconque des revendications précédentes, **caractérisé en ce qu'**il comporte des moyens pour réaliser un balayage d'une tête d'injection de la chambre de combustion (9) avec le fluide neutre.

5. Ensemble propulsif (1, 201) selon l'une quelconque des revendications précédentes, **caractérisé en ce que** le fluide neutre est de l'hélium.

6. Ensemble propulsif (1, 201) selon l'une quelconque des revendications précédentes, **caractérisé en ce que** l'ergol est de l'oxygène.

7. Ensemble propulsif (201) selon l'une quelconque des revendications précédentes, **caractérisé en ce que** le réchauffeur (15) est un échangeur thermique qui coopère avec une conduite (237) transportant un autre ergol.

8. Ensemble propulsif (1) selon l'une quelconque des revendications 1 à 6, **caractérisé en ce que** le réchauffeur (15) est un échangeur thermique qui coopère avec une conduite transportant des gaz de combustion.

## Patentansprüche

1. Antriebseinheit (1, 201) für eine Rakete, umfassend einen Behälter (2), der dazu vorgesehen ist, Treibstoff zu enthalten, einen Motor, umfassend eine Brennkammer (9), eine Treibstoffversorgungsleitung (11), die sich zwischen dem Behälter (2) und der Brennkammer (9) erstreckt, und auf der ein Absperrventil (24) vorgesehen ist, und einen Vorwärmer (15), dessen Eingang an die Versorgungsleitung (11) angeschlossen ist, und dessen Ausgang an den Behälter (2) angeschlossen ist, **dadurch gekennzeichnet, dass** der Eingang des Vorwärmers (15) eine Eingangsleitung (13a) umfasst, die einerseits an die Versorgungsleitung (11) stromabwärts zu dem Absperrventil (24) und andererseits an eine Zuleitung eines neutralen Fluids (31) angeschlossen ist.

2. Antriebseinheit (1, 201) gemäß Anspruch 1, **dadurch gekennzeichnet, dass** sie Mittel (4, 32) umfasst, die dazu vorgesehen sind, in der Zuleitung eines neutralen Fluids (31) einen Druck des neutralen Fluids mindestens gleich dem kritischen Druck des Triebstoffes aufrechtzuerhalten.

3. Antriebseinheit (1, 201) gemäß einem der vorhergehenden Ansprüche, **dadurch gekennzeichnet, dass** die Zuleitung eines neutralen Fluids (31) eine Rückschlagklappe (33) umfasst, die die Fluidzirkulation in der Zuleitung (31) nur in die Richtung zum Vorwärmer (15) hin gestattet.

4. Antriebseinheit (1, 201) gemäß einem der vorhergehenden Ansprüche, **dadurch gekennzeichnet, dass** sie Mittel umfasst, um ein Abtasten eines Spritzkopfes der Brennkammer (9) mit dem neutralen Fluid durchzuführen.

5. Antriebseinheit (1, 201) gemäß einem der vorhergehenden Ansprüche, **dadurch gekennzeichnet, dass** das neutrale Fluid Helium ist.

6. Antriebseinheit (1, 201) gemäß einem der vorhergehenden Ansprüche, **dadurch gekennzeichnet, dass** der Treibstoff Sauerstoff ist.

7. Antriebseinheit (201) gemäß einem der vorhergehenden Ansprüche, **dadurch gekennzeichnet, dass** der Vorwärmer (15) ein Wärmetauscher ist, der mit einer Leitung (237), die einen weiteren Treibstoff transportiert, zusammenwirkt.

8. Antriebseinheit (1) gemäß einem der Ansprüche 1 bis 6, **dadurch gekennzeichnet, dass** der Vorwärmer (15) ein Wärmetauscher ist, der mit einer Leitung, die Verbrennungsgase transportiert, zusammenwirkt.

## Claims

1. A propulsion assembly (1, 201) for a rocket, comprising a tank (2) configured to contain a propellant, an engine having a combustion chamber (9), a propellant feed pipe (11) extending between the tank (2) and the combustion chamber (9) and having an isolation valve (24) arranged therein, and a heater (15) having an inlet connected to the feed pipe (11) and an outlet connected to the tank (2), the assembly being **characterized in that** the inlet of the heater (15) comprises an inlet pipe (13a) connected firstly to the feed pipe (11) downstream from the isolation valve (24) and secondly to a neutral fluid feed (31).

2. A propulsion assembly (1, 201) according to claim 1, **characterized in that** it comprises means (4, 32) configured to maintain the neutral fluid in the neutral fluid feed (31) at a pressure that is not less than the critical pressure of the propellant.

3. A propulsion assembly (1, 201) according to either preceding claim, **characterized in that** the neutral fluid feed (31) comprises a check valve (33) allowing fluid to flow in the feed (31) only in the direction going towards the heater (15).

4. A propulsion assembly (1, 201) according to any preceding claim, **characterized in that** it comprises means for sweeping an injection head of the combustion chamber (9) with the neutral fluid.

5. A propulsion assembly (1, 201) according to any preceding claim, **characterized in that** the neutral fluid is helium.

6. A propulsion assembly (1, 201) according to any preceding claim, **characterized in that** the propellant is oxygen.

7. A propulsion assembly (201) according to any preceding claim, **characterized in that** the heater (15) is a heat exchanger that co-operates with a pipe (237) transporting another propellant.

8. A propulsion assembly (1) according to any one of claims 1 to 6, **characterized in that** the heater (15) is a heat exchanger that co-operates with a pipe transporting combustion gases.
